# EUROPEAN PATENT APPLICATION

(11) **EP 1 387 533 A1**
(43) Date of publication of application: **04.02.2004**
(21) Application number: 02291923.7
(22) Date of filing: 29.07.2002
(51) Int. Cl.: H04L 12/56

(54) **Communication of packet data units over signalling and traffic channels**

(71) Applicant: MOTOROLA, INC., Schaumburg, IL 60196 (US)
(72) Inventor: Janneteau, Christophe, 78390 Bois d'Arcy (FR); Petrescu, Alexandru, 91400 Orsay (FR); Catalina Gallego, Miguel, 92120 Montrouge (FR)
(74) Representative: Wharmby, Martin Angus

(57) **Abstract**

A method of communication of packet data units, especially IPv4 or IPv6 PDUs, over signalling channels (3) and data traffic channels (4) between a terminal (1) and a gateway (2). The signalling channels (3) offer a default level of Quality of Service and availability and the data traffic channels (4) are available on demand and subject to authorisation with a variable level of Quality of Service. Signalling channel profiles corresponding to respective ones of the signalling channels (3) and a plurality of data traffic channel profiles corresponding to respective ones of the data traffic channels (4) are established defining characteristics of packet data units that are suitable for transmission over the corresponding channel. The characteristics of a packet data unit are compared with the signalling channel profile, the packet data unit being transmitted over that signalling channel if its characteristics are in conformity with the signalling channel profile. If they are not in conformity therewith, the characteristics of the packet data unit are compared with at least one of the data traffic channel profiles, the packet data unit being transmitted over that data traffic channel if its characteristics are in conformity with the data traffic channel profile.

Preferably, the signalling channel profiles are downloaded to the terminal from the gateway by pushing or pulling.

## Description

### Field of the invention

This invention relates to communication of packet data units over signalling and data traffic channels.

### Background of the invention

Many different wired and wireless data communication technologies are being developed, such as UMTS Terrestrial Radio Access Network('UTRAN'), HiperLAN/2 and IEEE 802.11e wireless technologies, for example, which are QoS-enabled, that is to say where a choice is offered for the data traffic between channels having different Quality-of-Service parameters (such as bandwidth, delay, jitter, reliability against transmission errors and drop-out of the connection, for instance). The offer of different levels of QoS parameters implies a notion of session and most (or even all) of those QoS-enabled access technologies offer a connection-oriented interface to upper layers (such as IP). A realistic model for these interfaces can be presented as a set of signalling and data traffic channels where the signalling channels will offer a default level of QoS and availability whereas the data traffic channels are available on demand and subject to authorisation with a variable level of QoS.

Thus, QoS-enabled interfaces may comprise:
- One or more quasi-permanent (sometimes called 'always-available') signalling channels to be used to:
   ο convey access-specific signalling to handle (open/close, for example) data traffic channels.
   ο convey upper-layer signalling, for example IP packets considered as IP signalling. This allows a packet to be sent without opening a data traffic channel.
- Several data traffic channels (of specified QoS) to be used to convey data traffic with selected QoS levels. Because radio resources are scarce, data traffic channels are in general subject to connection admission control management: opening such a channel implies successful authorisation to do so, granted by the network.

It remains necessary to determine which channel an upper-layer packet data unit ('PDU') such as an IP packet should be sent on. Because there is no notion of control plane and user plane in TCP/IP, it is impossible to fully categorize IP packets as signalling and data. Hence, there is a need for a mechanism to determine the type of the packet in order to know whether it should be sent through a signalling or data traffic channel. Moreover, once the type of the IP packet has been decided, there is still a need for a mechanism to identify the channel the packet will be sent on among the different channels of the same type.

It is possible to rely on upper layers that also support the control plane / user plane paradigm to route the packet data units. This is the case in the Universal Mobile Telecommunications System ('UMTS') and General Packet Radio Service ('GPRS') standards for instance and other similar standards. In the case of UMTS, the whole protocol stack, including the Access Stratum ('AS') and Non Access Stratum ('NAS') has been standardised in the same way to support control and user planes. In that case the control plane of NAS protocols (for example, in the case of GPRS, GPRS Mobility Management ('GMM') and SM) relies on the AS control plane interface (such as the Radio Resource Control ('RRC') interface) while the user plane of NAS protocols will rely on the AS user plane interface (such as the Packet Data Convergence Protocol ('PDCP')). Such an approach requires standardisation of the upper layers (such as the NAS protocols) in accordance with the standardisation of the lower layers (AS protocols) so that the mapping of control (or user) primitives of the upper layers onto lower layers ones is defined once for all. A major drawback of this approach is that it does not work for packet data units of upper layers (such as IP) that have been standardised independently of the standard of the access technology (such as UMTS AS) and that do not support the control plane / user plane paradigm.

Another type of technology related to packet data unit routing is the Service Specific Convergence Sub-layers ('SSCS') part of the Packet-based Convergence Layer in the HiperLAN/2 protocol stack. The aim of the SSCS is to adapt service request from upper layers (for example Ethernet) to the service offered by the Data Link Control layer ('DLC'). Up to now only Ethernet SSCS has been standardised, there is nothing for IP or other high layer data traffic protocols. Moreover, Ethernet SSCS is very basic as it aims to make HiperLAN/2 network look like a wireless segment of a switched Ethernet. In that case the control plane/user plane paradigm of DLC is hidden as only two (data) channels are supported: each channel is statically pre-established and used to convey Ethernet frames of two different priorities. In that case the HiperLAN/2 system is 'under-used' as no advanced QoS feature is supported.

The Internet Engineering Task Force draft entitled "Requirements for Separation of IP Control and Forwarding" <draft-anderson-forces-reas-02.txt> presents a very high level model to separate Control Elements and Forwarding Elements in IP devices (mainly routers) and discusses requirements for a standard set of mechanisms for connecting these components. The focus here is on enabling Control Elements (for example a routing daemon) to dialog with any type of Forwarding Elements (for example a forwarding table) in a generic manner (such as discovering Forwarding Elements capabilities). In this context Control and Forwarding Elements are clearly identified within the IP devices together with the set of IP protocols considered as control/signalling (for example the routing protocol). Hence this document is not concerned with a generic mechanism to distinguish between data and signalling IP packets to be carried over a QoS-enabled access technology.

### Summary of the invention

The present invention provides a method of, and apparatus for, communication of packet data units over at least one signalling channel and a plurality of data traffic channels as described in the accompanying claims.

### Brief description of the drawings

Figure 1 is a schematic diagram of a method of communication of packet data units over signalling channels and data traffic channels in accordance with one embodiment of the invention, given by way of example,
Figure 2 is a schematic diagram of an algorithm used in the method of communication illustrated in Figure 1,
Figure 3 is a schematic diagram of a system for communication by a method as illustrated in Figure 1, and
Figure 4 is a schematic diagram of a method of creating data traffic channels in a method as illustrated in Figure 1.

### Detailed description of the preferred embodiments

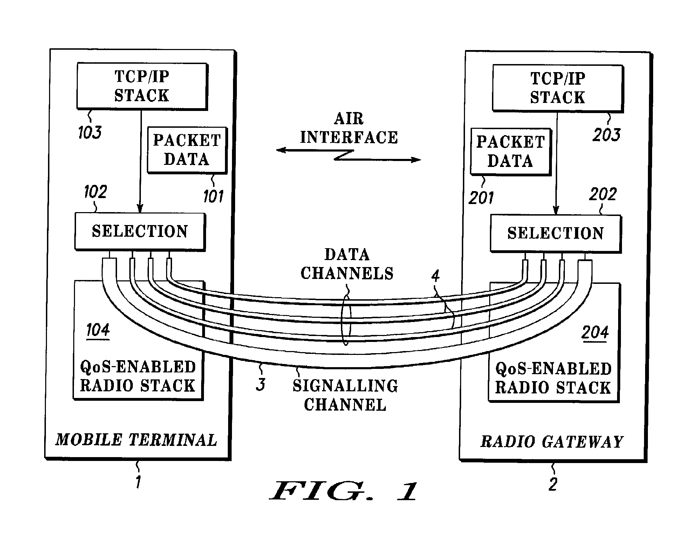

The embodiment of the present invention illustrated in the accompanying drawings provides a method of communication of packet data units such as 101 and 201 between a terminal 1 and a radio gateway 2 over a plurality of signalling channels 3 (one of which is shown in Figure 1) and a plurality of data traffic channels 4. The signalling channels 3 offer a default level of Quality of Service with quasi-permanent availability. The data traffic channels 4 are available on demand and are subject to authorisation with a variable level of Quality of Service.

With reference to the example given above with the NAS (GMM+SM) and AS (RRC, PDCP) protocols in UMTS, the 'signalling channel' and 'data traffic channel' may be identified at the AS interfaces accessed by NAS as follows:
- the AS represents the radio protocol stack, and the AS interface to NAS is the so-called radio interface,
- NAS are the upper layer protocols, that is to say that the NAS packet is the so-called packet data unit,
- RRC (part of AS) primitive called DIRECT_TRANSFER_REQ provided by the RRC interface (i.e. part of the AS interface) allows an upper layer packet data unit to be directly transferred to the peer entity (mobile terminal or gateway): this primitive would implement the signalling channel,
- another example of "signalling channel" provided by the RRC interface is the broadcast or paging service,
- PDCP (part of AS) primitive called PDCP_DATA_REQ provided by the PDCP interface (i.e. part of the AS interface) allows an upper layer packet data unit to be sent to the peer (mobile terminal or gateway) onto so-called Radio Bearers; the radio bearers, which support different levels of QoS and which have to be opened and closed, implement the data traffic channels.

The method includes a selection step 102, 202 for transmission of packet data units from the terminal 1 and from the gateway 2, in which the appropriate channel is selected among the channels 3 and 4.

In order to determine which channel to send a packet data unit over, especially (but not exclusively) an IP packet, a signalling channel profile corresponding to the signalling channel 3 and a plurality of data traffic channel profiles corresponding to respective ones of the data traffic channels 4 are established. The channel profiles define characteristics of packet data units that are suitable for transmission over the corresponding channel. These channel profiles are used in the selection steps 102 and 202 to form interfaces between the TCP/IP stacks 103, 203 and the QoS-enabled stacks 104, 204.

When a packet data unit is to be sent, its characteristics are first compared with the signalling channel profile and the packet data unit is transmitted over that signalling channel 3 if its characteristics are in conformity with the signalling channel profile. If its characteristics are not in conformity with the signalling channel profile, the characteristics of the packet data unit are next compared with one of the data traffic channel profiles, the packet data unit being transmitted over that data traffic channel 4 if its characteristics are in conformity with the data traffic channel profile.

In the preferred embodiment of the invention, this procedure is applied for sending packet data units both from the terminal 1 and from the gateway 2. Moreover, on both sides (mobile terminal and radio gateway) the procedure is managed dynamically, so that the system is sufficiently flexible to function even in the case of mobility of the terminal 1 from communication with one gateway 2 to communication with another and to furnish and respond to the exchanges of information required by the QoS context of the data traffic channels 4.

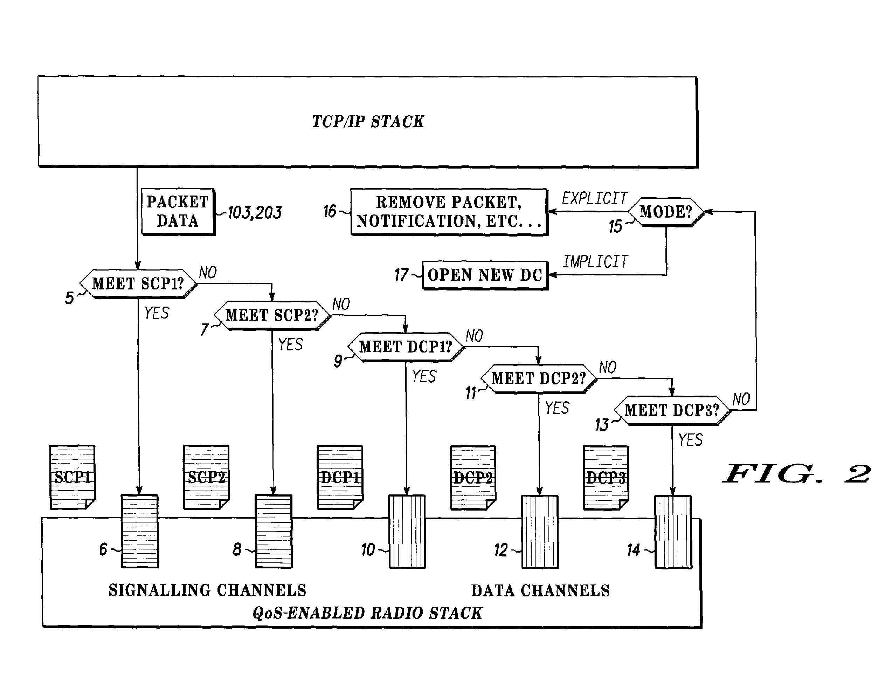

In more detail, in the case of Transmission Control Protocol/Internet Protocol (TCP/lP) packet data units, the channel profiles 3 and 4 are used to determine whether an incoming IP packet should be sent on the corresponding channel or not. An IP packet must be compared with the different channel profiles in the following order, as shown in Figure 2, which illustrates the algorithm of the method for the case of two signalling channels 3 and three opened data traffic channels 4:
- first, characteristics of the IP packet are compared with the signalling channel profiles SCP1 and SCP2 of the ('always-available', that is to say quasi-permanent) signalling channels 3. The signalling channel profiles of all the signalling channels 3 are taken one after the other unless and until a match is found. The order of the signalling channel profiles is not very important; however, in the preferred embodiment of the invention, the signalling channel profiles that have the highest probabilities to be met by the characteristics of the IP packets are tested first to optimise performance.
   o In step 5, characteristics of the IP packet are compared with the signalling channel profiles SCP1. If the characteristics match the signalling channel profile SCP1 then the packet is sent through the corresponding signalling channel at step 6. If the characteristics do not match the signalling channel profile SCP1, then the characteristics of the IP packet are compared with the signalling channel profiles SCP2 in step 7. If the characteristics match the signalling channel profile SCP2 then the packet is sent through the corresponding signalling channel at step 8.
- If the IP packet does not meet any of the signalling channel profiles then it is compared with the data traffic channel profiles DCP1, DCP2 and DCP3 of the opened data traffic channels 4. Once again, the order of the data traffic channel profiles is not very important; however, in the preferred embodiment of the invention, the data traffic channel profiles that have highest probabilities to be met by the characteristics of the IP packets should be tested first to optimise performance.
   ο In step 9, characteristics of the IP packet are compared with the data traffic channel profiles DCP1. If the characteristics match the data traffic channel profile DCP1 then the packet is sent through the corresponding signalling channel at step 10. If the characteristics do not match the data traffic channel profile DCP1, then the characteristics of the IP packet are compared with the data traffic channel profile DCP2 in step 11. If the characteristics match the data traffic channel profile DCP2 then the packet is sent through the corresponding signalling channel at step 12. If the characteristics do not match the data traffic channel profile DCP2, then the characteristics of the IP packet are compared with the data traffic channel profile DCP3 in step 13. If the characteristics match the data traffic channel profile DCP3 then the packet is sent through the corresponding signalling channel at step 14.
   ο If the IP packet does not meet any of the data traffic channel profiles then two cases have to be considered depending on the mode that had been selected at step 15 for opening data traffic channels *(explicit* or *implicit):*
- In the *explicit* mode, data traffic channels can be opened only in response to an explicit trigger from an external source, for example from the user or from networking middleware. In this case, the associated data traffic channel profile is created by this external trigger at the time the corresponding data traffic channel is created. In the event that the IP packet cannot be sent on any data traffic channel, at step 16, in one embodiment of the invention, the packet is removed silently and, in another embodiment of the invention, the external source is notified and asked to open a new data traffic channel for this packet.
- In the *implicit* mode, the data traffic channels are opened automatically when an IP packet has to be sent if there is no opened data traffic channel that matches this packet. In this case, at step 17 a new data traffic channel will be opened, the associated data traffic channel profile will be created dynamically based on the parameters of the IP packet to be transmitted and the packet will be sent through this channel.

The semantics of a channel profile are similar to filtering rules (allow, deny) used in a firewall. Characteristics of each incoming IP packet are compared with the rule (that is to say the channel profile) to determine whether it can be sent through the associated channel or not.

The semantics of a channel profile must be flexible enough to support different levels of granularity so that complex filtering rules can be supported. They are able to define filtering rules based on various relevant fields of the IP packet (as well as various standard protocols encapsulated within this packet). Examples of such parameters are:
- Source and destination IP addresses
- IPv6 extension headers (for Mobile-IPv6 for instance)
- Encapsulated protocol (ICMP, TCP, UDP,...)
- Any message of standard encapsulated protocol (i.e. Router Advertisement in ICMPv6...)
- Source and destination transport protocol port (TCP or UDP ports...)
- Traffic Class
- Flow label

An example of a signalling channel profile could be:
- Deny all IP packets
- But the ICMPv6 Router Solicitations

An example of a data traffic channel profile could be:
- Deny all IP packets
- But any FTP flow

Concerning the channel profile syntax of the channel profiles, various representation formats can be used; in one embodiment of the invention, the channel profiles are represented by text; in a preferred embodiment of the invention, the channel profiles are represented by extensible mark-up language (XML). However, it will be understood that other standard representations for policies may be used.

A textual representation of the above example signalling channel profile is:

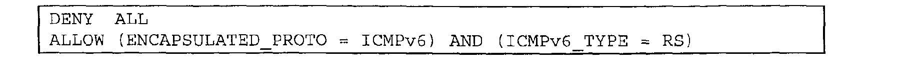

A textual representation of the above example data traffic channel profile is:

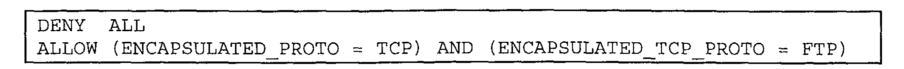

The semantics and syntax of the channel profiles are chosen so that they are as compact as possible in order to minimize the amount of bytes sent on the radio interface when such profile have to be downloaded (as explained later in the document).

The signalling channels are opened automatically once the mobile terminal 1 is attached to the radio gateway 2 (radio-connected). Thus they can be considered as 'always-available' by upper layers such as IP. As a consequence the associated signalling channel profile must be available before any upper layer packet can be sent over the radio channel.

The dynamic management of signalling channel profiles for the terminal 1 is different from that for the gateway 2. For the terminal 1, there are two alternatives, particularly suitable for a mobile terminal.

In one embodiment of the present invention, the signalling channel profiles are pre-configured on the mobile terminal so that they are immediately available at start-up. These profiles may be modified subsequently by external data, for example from the user or from networking middleware, as required, for instance when roaming to another operator that requires different signalling channel profiles.

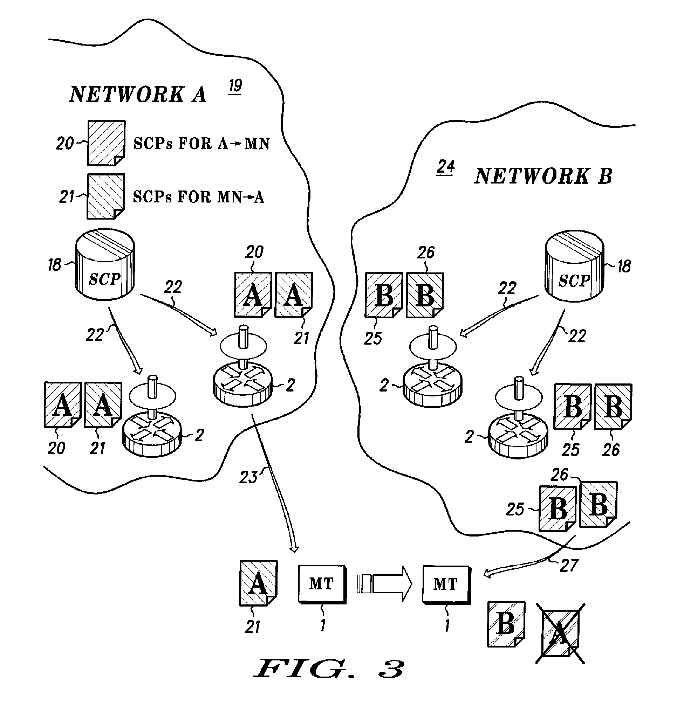

In another embodiment of the present invention, illustrated in Figure 3, the signalling channel profiles are dynamically downloaded from the network 18, through the radio gateway 2 the mobile terminal is attached to. As soon as it is attached to the network, the mobile terminal downloads the signalling channel profiles from the network before being able to send any upper layer packet data units (e.g. IP packets) over the radio.

In one variant of this embodiment of the invention, signalling channel profiles are repeatedly (and periodically) broadcast over the radio, for example over a broadcast or a multicast channel. This is the Push approach.

In another variant of this embodiment of the invention, signalling channel profiles are requested by the mobile terminal from the network by appropriate signalling. This is the Pull approach.

Because signalling channel profiles to be used have a high probability to be different depending on the network the mobile terminal connects to, they may be considered as network-dependent. In the context of a mobile terminal roaming (or even handing over without movement) between different networks, the problem is then (for the mobile terminal) to discover as soon as possible the signalling channel profiles to be used with the new network. The second approach (dynamic download) has great advantages here since its enables the mobile terminal to get the signalling channel profiles on-the-fly. The signalling channel profiles to be sent to the mobile terminal can be configured manually on each radio gateway. However in the embodiment of the invention illustrated in Figure 3, the signalling channel profiles are stored within a policy server 18 in the core network 19 and pushed automatically to the radio gateways 2 of the network 19 by means of an appropriate network management. Of course it is possible to support different signalling channel profiles for different radio gateways 2 within the network if needed.

For the radio gateway 2, two kinds of signalling channel profiles are managed on the network side, that is to say two signalling channel profiles per signalling channel:
- transmission signalling channel profiles 20 associated to signalling channels on the radio gateway side and used to select on which signalling channel an IP packet from the network 19 to be transmitted to the mobile terminal 1 must be sent, and
- reception signalling channel profiles 21 that are used by the radio gateway to check that the IP packets received on a signalling channel are in conformity with what the mobile terminal is expected to send on that channel. If the incoming IP packet does not match this signalling channel profile then the radio gateway should not forward it to the network 19. Note that the signalling channel profiles used by the mobile terminal for its outgoing IP packets are expected to be the same as the reception signalling channel profiles 21 used by the radio gateway for its checking. As explained before, the mobile terminal 1 can download them dynamically from the network through the radio gateway 2.

As mentioned above, both the transmission and reception signalling channel profiles 20 and 21 can be configured manually on each radio gateway 2. However, in the preferred embodiment of the invention illustrated in Figure 3, the signalling channel profiles 20 and 21 are stored within the policy server 18 in the core network and are sent automatically to the desired radio gateways 2, as shown at 22 by means of an appropriate network management, the radio gateway 2 to which the terminal 1 is attached then forwarding the reception signalling channel profile 20 to the terminal 1, as shown at 23. These SCPs, called reception SCPs from the gateway point of view, are then used as transmission SCPs by the terminal

When the mobile terminal 1 is handed over to a radio gateway 2 of a different network 24, the corresponding reception signalling channel profile 26 that the policy server 18 of the network 24 has pushed (in addition to the transmission signalling channel profiles 25) to the radio gateways 2 of the network 24 is dynamically forwarded to the terminal 1, as shown at 27, which substitutes it for the previous signalling channel profiles.

Turning now to the data traffic channel profile management both for the mobile terminal 1 and the radio gateway 2, data traffic channels are QoS-aware in the sense that one can specify the desired QoS to be supported by the channel when opening it. Each data traffic channel 4 is also associated to a data traffic channel profile to identify the type of IP packets that can be sent though this channel.

In Explicit mode, the data traffic channel profile is passed on by the source that creates it, together with the required QoS class, as and when a new data traffic channel is opened.

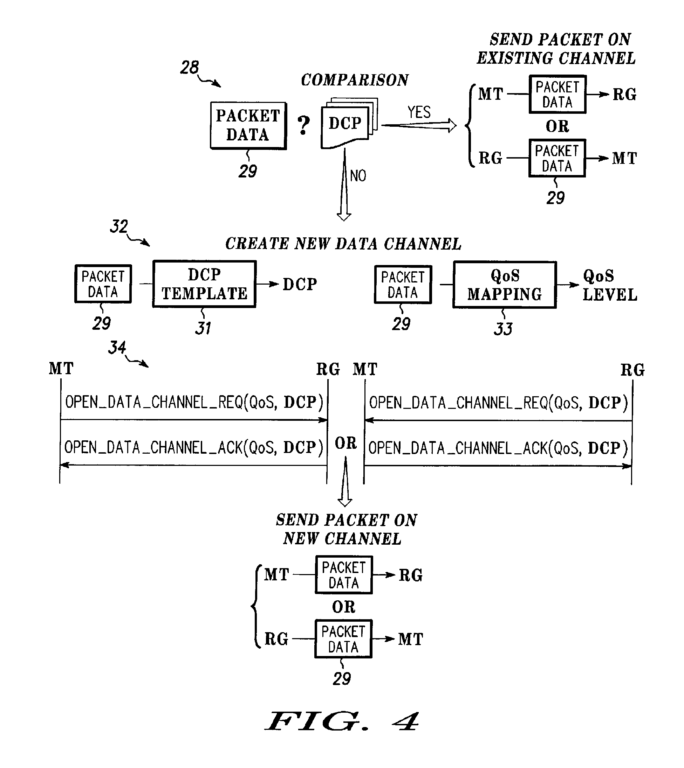

In Implicit mode (in addition to the default behaviour), as shown in Figure 4, a data traffic channel can be opened automatically at step 28 when an IP packet 29 appears for transmission and cannot be sent on any of the already opened data traffic channels 30. In that case both the data traffic channel profile and QoS associated to the data traffic channel are dynamically created:
The data traffic channel profile is dynamically created from the parameters of the IP packet 29. In order to know which parameters of the packet 29 have to be considered, a data traffic channel profile template 31 is used at step 32. This template is configurable so that different types of data traffic channel profile can be dynamically created depending on the IP packet to be sent.
The data traffic channel profile template 31 tries as much as possible to identify the application (with QoS requirements) the packet belongs to. At least in this case, the following parameters are considered:
   - IP source address
   - IP destination address
   - Encapsulated transport protocol (TCP, UDP,...)
   - Source and destination transport protocol port (TCP or UDP ports...)
   - Traffic Class
   - Flow label
The QoS level associated to the data traffic channel is dynamically created from the parameters of the IP packet by means of a QoS mapping table 33 at step 32. This table is configurable so that different types of QoS mapping can be performed. More specifically, in an embodiment suitable for the IPv6 standard, the QoS class of the data traffic channel is derived from the IPv6 Traffic Class field (containing "DiffServ DSCP") of the IP packet by means of an appropriate mapping table.
At step 34, the data traffic channel profile and the associated QoS are passed to the peer entity (mobile terminal 1 to radio gateway 2 or the opposite) when opening a new data traffic channel, so that both ends know the characteristics of the channel and are able to send data on it (in particular in the case of a bi-directional data traffic channel); this can be part of the signalling exchanged between the mobile terminal 1 and the radio gateway 2 when opening the data traffic channel. Of course, even if unusual, there may be some cases (for policy reasons) where the peer entity will use its own data traffic channel profile for that newly opened data traffic channel; in that case the data traffic channel profiles used for transmission from one end of the data traffic channel will be different from those used for transmission from the other end.
Finally, at step 34 the IP packet 29 is sent over the new data traffic channel 4.
The method described above provides a generic mechanism to determine which channel of a QoS-enabled access technology an upper-layer packet data unit, such as an IP packet, should be sent on. The method utilises a channel profile associated with each channel. The channel profile describes the type of IP packets that can be conveyed through this channel. The method includes:
   - signalling channel profiles for signalling channels
   - data traffic channel profiles for data traffic channels
   - an algorithm for channel discrimination based on channel profiles.
The dynamic management of these Channel Profiles at both the mobile terminal and radio gateway makes the method flexible enough to be applied in various mobility and QoS contexts. The dynamic management of the Channel Profiles includes:
   - distribution of signalling channel profiles to radio gateways.
   - two signalling channel profiles per signalling channel at the radio gateway:
      ο one to determine which packet data units are to be sent on this channel; this is called the transmission signalling channel profile.
      ο one to check that incoming packet data units sent by the mobile terminal (and received by the radio gateway through this signalling channel) are in conformity with the signalling channel profile; this is called the reception signalling channel profile.
   - dynamic download of mobile terminal signalling channel profiles from the network.
   - dynamic opening of data traffic channel based on data traffic channel profiles templates (and qos mapping tables).
   - diffusion of the data traffic channel profile of a newly opened data traffic channel to the peer entity.

The method illustrated in the accompanying drawings is generic and applies to:
- various upper-layer protocols (IP or others) to be run on top of QoS-enabled access technologies.
- various QoS-enable wired or wireless technologies (for example UTRAN, HIPERLAN/2, IEEE802.11e) used as access or within a backbone.
- various (even non-QoS-aware) connection-oriented wired or wireless technologies used as access or within the backbone.

The method can be implemented within a convergence layer between the upper layer (e.g. IP stack) and the protocol stack of the QoS-enabled access technology considered.

## Claims

1. A method of communication of packet data units over at least one signalling channel (3) and a plurality of data traffic channels (4) between a terminal (1) and a gateway (2), where said signalling channel (3) offers a default level of Quality of Service and availability and said data traffic channels (4) are available on demand and subject to authorisation with a variable level of Quality of Service,
**characterised in that** a signalling channel profile corresponding to said signalling channel (3) and a plurality of data traffic channel profiles corresponding to respective ones of said data traffic channels (4) are established defining characteristics of packet data units that are suitable for transmission over the corresponding channel, the characteristics of a packet data unit are compared with said signalling channel profile, the packet data unit being transmitted over that signalling channel if its characteristics are in conformity with said signalling channel profile and, if they are not in conformity therewith, the characteristics of said packet data unit are compared with at least one of said data traffic channel profiles, the packet data unit being transmitted over that data traffic channel if its characteristics are in conformity with said data traffic channel profile.

2. A method of communication of packet data units as claimed in claim 1, wherein said data packet units include Internet Protocol data packet units in conformity with version 4 or version 6 or another version of the Internet Protocol.

3. A method of communication of packet data units as claimed in claim 1 or 2, wherein the characteristics of packet data units are compared with said channel profiles and the transmission channel is selected prior to transmission of the packet data units from said terminal.

4. A method of communication of packet data units as claimed in any preceding claim, wherein the characteristics of packet data units are compared with said channel profiles and the transmission channel is selected prior to transmission of the packet data units from said gateway.

5. A method of communication of packet data units as claimed in any preceding claim, wherein said channel profiles are such that said data packet units are selectively transmitted over a signalling channel or a data traffic channel as a function of a field in protocol headers therein.

6. A method of communication of packet data units as claimed in claim 5, wherein said channel profiles are such that said data packet units are selectively transmitted over a signalling channel or a data traffic channel as a function of a source and/or destination field in the protocol headers.

7. A method of communication of packet data units as claimed in claim 5 or 6, wherein said channel profiles are such that said data packet units are selectively transmitted over a signalling channel or a data traffic channel as a function of an IP address included in said source and/or destination field.

8. A method of communication of packet data units as claimed in any of claims 5 to 7, wherein said channel profiles are such that said data packet units are selectively transmitted over a signalling channel or a data traffic channel as a function of a transport protocol port included in said source and/or destination field.

9. A method of communication of packet data units as claimed in any preceding claim, wherein said channel profiles are such that said data packet units are selectively transmitted over a signalling channel or a data traffic channel as a function of the value of fields of extension headers they contain.

10. A method of communication of packet data units as claimed in any preceding claim, wherein said channel profiles are such that said data packet units are selectively transmitted over a signalling channel or a data traffic channel as a function of the value of fields of encapsulated protocol headers they contain.

11. A method of communication of packet data units as claimed in any preceding claim, wherein opening of said data traffic channels and creation of the associated data traffic channel profiles are triggered explicitly, and including notifying said terminal of unsuccessful sending of a data packet unit that is not in conformity with any channel profile.

12. A method of communication of packet data units as claimed in any preceding claim, wherein opening of a new data traffic channel and creation of the associated data traffic channel profile are triggered implicitly in the event of a data packet unit not being in conformity with any current channel profile, the data packet unit then being transmitted on the new data traffic channel.

13. A method of communication of packet data units as claimed in claim 12, wherein opening of said new data traffic channel and creation of the associated data traffic channel profile are triggered by one of said terminal and said gateway, and including communicating said associated data traffic channel profile to the other of said terminal and said gateway.

14. A method of communication of packet data units as claimed in any of claims 11 to 13, wherein QoS parameters of the new data traffic channel are selected from a QoS mapping table as a function of information in a field in the data packet unit.

15. A method of communication of packet data units as claimed in any preceding claim, wherein at least said signalling channel profiles are stored in said terminal.

16. A method of communication of packet data units as claimed in any preceding claim, wherein at least said signalling channel profiles are downloaded to said terminal.

17. A method of communication of packet data units as claimed in claim 16, wherein at least said signalling channel profiles are downloaded to said terminal from said gateway.

18. A method of communication of packet data units as claimed in claim 16 or 17, wherein at least said signalling channel profiles are repeatedly broadcast or multicast.

19. A method of communication of packet data units as claimed in any of claims 16 to 18, wherein at least said signalling channel profiles are downloaded to said terminal in response to a request from said terminal.

20. A method of communication of packet data units as claimed in any preceding claim, wherein the characteristics of packet data units to be transmitted from said gateway are compared with transmit signalling channel profiles and the transmission channel is selected before transmission of the packet data units, and the characteristics of packet data units received at said gateway are compared with receive signalling channel profiles before forwarding by said gateway.

21. A terminal for use in a method of communication of packet data units with a gateway over at least one signalling channel and a plurality of data traffic channels as claimed in any preceding claim, and comprising channel selection means for comparing the characteristics of a packet data unit with said signalling channel profile, enabling transmission of the packet data unit over that signalling channel if it is in conformity with said signalling channel profile and, if it is not in conformity therewith, comparing the characteristics of said packet data unit with at least one of said data traffic channel profiles, and enabling transmission of the packet data unit over that data traffic channel if it is in conformity with said data traffic channel profile.

22. A gateway for use in a method of communication of packet data units with a terminal over at least one signalling channel and a plurality of data traffic channels as claimed in any of claims 1 to 20, and comprising channel selection means for comparing the characteristics of a packet data unit with said signalling channel profile, enabling transmission of the packet data unit over that signalling channel if it is in conformity with said signalling channel profile and, if it is not in conformity therewith, comparing the characteristics of said packet data unit with at least one of said data traffic channel profiles, and enabling transmission of the packet data unit over that data traffic channel if it is in conformity with said data traffic channel profile.
